# EUROPÄISCHE PATENTSCHRIFT

(11) **EP 0 990 121 B1**
(45) Veröffentlichungstag und Bekanntmachung des Hinweises auf die Patenterteilung: **30.01.2002**
(21) Anmeldenummer: 98917052.7
(22) Anmeldetag: 23.03.1998
(51) Int. Cl.: G01D 5/20

(54) **WEGAUFNEHMERSYSTEM FÜR SCHALTMAGNETE**
SOLENOID COIL DISPLACEMENT SENSOR SYSTEM
SYSTEME CAPTEUR DE DEPLACEMENT POUR SOLENOIDES

(30) Priorität: 20.06.1997 DE 19726256
(43) Veröffentlichungstag der Anmeldung: 05.04.2000
(73) Patentinhaber: HYDAC Electronic GmbH, 66128 Saarbrücken (DE)
(72) Erfinder: BILL, Martin, D-66625 Nohfelden (DE); BERESCHKA, Andreas, F-57460 Bousbach (FR)
(74) Vertreter: Patentanwälte Bartels und Partner
(86) Internationale Anmeldenummer: EP9801679
(87) Internationale Veröffentlichungsnummer: WO9859217

(56) Entgegenhaltungen:
- DE-A- 3 925 994
- DE-A- 19 514 891
- US-A- 4 473 811
- CLARK ET AL.: "COAXIAL TRANSFORMER BOBBIN" IBM TECHNICAL DISCLOSURE BULLETIN, Bd. 26, Nr. 6, November 1983, Seiten 2796-2797, XP002071893

## Beschreibung

Die Erfindung betrifft ein Wegaufnehmersystem für Schaltmagnete mit mindestens zwei auf einem Grundspulenkörper hintereinander angeordneten Spulenwicklungen.

Dahingehende Wegaufnehmersysteme funktionieren grundsätzlich nach dem Transformatorprinzip. Dabei werden mindestens eine Primärwicklung, eine Sekundärwicklung sowie ein Kernstab benötigt, der in der Regel mit dem kolbenförmigen Schaltteil eines Schaltmagneten verbunden ist und der den zu messenden Weg innerhalb des Wegaufnehmers durchfährt. An die Primärwicklung dieser Anordnung wird eine pulsierende Versorgungsspannung angelegt, wobei die Sekundärwicklung ein Ausgangssignal in Form von Spannung abgibt, das sich durch das Verfahren des Kernstabes entsprechend verändert. In Fortentwicklung dieses Grundgedankens ist es auch bekannt, für das Durchfahren des Ausgangssignals durch einen definierten Nullpunkt für die eine Wegrichtung des Kernstabes ein positives und für die andere Wegrichtung ein negatives Signal vorzusehen, wobei zur Realisierung der dahingehenden Anordnungen zwei Sekundärwicklungen benötigt werden.

Bei dem letztgenannten Wegaufnehmersystem (Mannesmann Rexroth "Der Hydraulik Trainer" Band 2, S.18) werden die Wicklungen hintereinander auf einem Spulenkörper angeordnet, so daß die Spule in industriellem Maßstab gut herstellbar ist und die geforderten Präzisionswerte erreicht. Nachteil dieser Lösung ist die große Baulänge durch die hintereinander angeordneten beiden Sekundärwicklungen sowie die Primärwicklung. Die zwischen den beiden Sekundärwicklungen angeordnete Primärwicklung verhindert, daß die Sekundärwicklungen in einem Arbeitsgang gewickelt werden können, so daß diese erst nachträglich miteinander verbunden und kontaktiert werden, was bei der Herstellung des bekannten Wegaufnehmersystems kostenintensiv ist.

Durch die DE 195 14 891 A1 ist eine Positionsmeßstrecke mit einer als Meßspule ausgebildeten langgestreckten Sekundärspule bekannt, an deren Endbereichen jeweils gegensinnig mit einer Wechselspannung beaufschlagbare Primärspulen angeordnet sind. Ein Permanentmagnet ist entlang der Sekundärspule verschiebbar, wobei zwei Magnetfeldsensoren, die an eine elektronische Bereichserkennungseinrichtung angeschlossen sind, ein Meßsignal an der Sekundärspule aufnehmen, sofern der Permanentmagnet zwischen den Magnetfeldsensoren eine Position einnimmt. Zwar können durch diese bekannte Lösung die störungsbehafteten, nicht linearen Randbereiche der Sekundärspule für eine Meßwerterfassung ausgeblendet werden, so daß eine Mehrdeutigkeit des Meßsignals vermieden wird; allein die Positionsmeßstrecke erfordert eine längere Bewegungsbahn zur Positionserkennung, was zu sehr großen Baulängen dieses bekannten Wegaufnehmersystems führt. Auch ist die Sensorik sowie die Auswerteelektronik aufwendig und kostenintensiv.

Der nächstkommende Stand der Technik in Form der DE 39 25 994 A beschreibt ein Wegaufnehmersystem für Schaltmagnete nach dem Transformatorprinzip. Das Wegaufnehmersystem besitzt zwei auf einem Grundspulenkörper aufgewickelte und hintereinander angeordnete Spulenwicklungen. Die beiden Spulenwicklungen sind räumlich über einen etwa mittig am Grundspulenkörper in Längsrichtung angeordneten Mittelsteg voneinander getrennt, wobei diese eine Sekundärwicklung ausbilden. Über dieses Paar an Sekundärwicklungen wird nach Zwischenlegen einer Folie ein Paar von Primärwicklungen gelegt, die gemeinsam neben der Sekundärwicklung die Primärwicklung bilden. Bei der bekannten Lösung sind aufgrund der beschriebenen Anordnung die maschinell zu fertigenden Anbindungen der Wickelanfänge und Wikkelenden ebenso erschwert wie das maschinelle Anpendefn der Wicklungen an den jeweiligen Spulenkörper, was zu hohen Herstellkosten führt.

In der US-A-4 473 811 ist ein Transformator beschrieben, der eine nahezu identische Bauart besitzt zu dem vorstehend beschriebenen Wegaufnehmersystem nach der DE 39 25 994 A. Das US-Dokument zeigt einen Transformator mit einem Grundspulenkörper, auf dem in jedem der beiden Sektoren je eine Primärwicklung und eine Sekundärwicklung übereinandergewickelt sind. Dabei sind die einzelnen Spulen von Primär- und Sekundärwicklung jeweils in Reihe geschaltet.

Durch die Veröffentlichung Clark et al "Coaxial Transformer Bobbin" IBM Technical Disclosure Bulletin, Bd.26, Nr.6, Nov.1983, Seiten 2796-2797, XP002071893 ist eine Anordnung von Primär- und Sekundärspule bekannt, bei der die Sekundärwicklung auf einem weiteren Spulenkörper angeordnet ist, der den Grundspulenkörper unter Anlage mit der Primärwicklung umfaßt. Der zweite äußere Spulenkörper ist von der Seite her aufsteckbar. Die Drähte von Primär- und Sekundärspule kreuzen sich nicht, so daß die beiden Spulenkörper zwar aneinander anliegen, aber dennoch zueinander verschiebbar sind. Die letztgenannten beiden Dokumente geben einem Fachmann aber keinen Hinweis, wie die maschinelle Anbindung der Wickelanfänge und Wickelenden durchzuführen oder gar zu erleichtern ist.

Ausgehend von diesem Stand der Technik liegt der Erfindung die Aufgabe zugrunde, die bekannten Wegaufnehmersysteme derart weiter zu entwickeln, daß sich diese kostengünstig herstellen lassen, eine verkürzte Baulänge realisierbar und die maschinelle Fertigung erleichtert ist. Eine dahingehende Aufgabe löst ein Wegaufnehmersystem nach den Merkmalen des Anspruches 1.

Dadurch, daß gemäß Anspruch 1 an dem Mittelsteg paarweise diametral einander gegenüberliegend jeweils Anbindestellen für den Wikkelanfang und das Wickelende von Primär- und Sekundärwicklungen vorhanden sind, sind die maschinell zu fertigenden Anbindungen der Wickelanfänge und Wickelenden und mithin das maschinelle Anpendeln der Wicklungen an den jeweiligen Spulenkörper erleichtert.

Im übrigen wird durch die mittige Anordnung der angesprochenen Kontaktierungspunkte wiederum Bauraum für das Wegaufnehmersystem gespart. Vorzugsweise ist dabei vorgesehen, daß die Anbindestellen aus von einem Wicklungsdraht umwickelbaren Festlegezapfen gebildet sind. Da die relevanten Spulenwicklungen nicht hintereinander, sondern übereinander angeordnet sind, ist die Baulänge des Wegaufnehmersystems wiederum verkürzt. Da die Primärwicklungen getrennt von den Sekundärwicklungen wickelbar sind, ist eine durchgehende Wicklung für jeden Spulenkörper möglich, so daß kostenintensive Unterbrechungen im Wickelvorgang vermieden sind.

Bei einer bevorzugten Ausführungsform des erfindungsgemäßen Wegaufnehmersystems ist vorgesehen, daß die Primärwicklung auf dem Grundspulenkörper aufgewikkelt ist und die beiden Sekundärwicklungen auf einem weiteren Spulenkörper, der den Grundspulenkörper unter Anlage mit den Primärwicklungen umfaßt. Hierdurch ergibt sich auch in radialer Richtung ein klein aufbauendes Wegaufnehmersystem für einen Schaltmagneten.

Bei einer weiteren bevorzugten Ausführungsform des erfindungsgemäßen Wegaufnehmersystems ist der weitere Spulenkörper aus zwei Körperhälften gebildet, die auf den Grundspulenkörper mit seinen beiden Primärwicklungen von beiden Enden her aufsteckbar sind. Hierdurch ist ein symmetrischer Aufbau erreicht und die Spulenkörper bestehen im wesentlichen aus drei Einzelkomponenten, was den Zusammenbau erleichtert und die Möglichkeit schafft, nach Anbringung der Primärwicklungen die beiden Sekundärwicklungen durchgehend auf den weiteren Spulenkörper aufzuwickeln, was Kosten spart.

Bei einer weiteren bevorzugten Ausführungsform des erfindungsgemäßen Wegaufnehmersystems ist der Mittelsteg von einer Drahtführung durchbrochen. und weist beidseitig Anlageflächen für die aufsteckbaren Körperhälften des weiteren Spulenkörpers auf. Über die Nut innerhalb des Mittelsteges läßt sich der Wickeldraht jeweils von einer Spulenseite auf die andere Seite ohne größeren Aufwand führen und eine Lageorientierung der jeweiligen Spulenkörper zum Mittelsteg ist über die Anlageflächen erreicht.

Weitere vorteilhafte Ausführungsformen des erfindungsgemäßen Wegaufnehmersystems sind Gegenstand der abhängigen Ansprüche.

Im folgenden wird das Wegaufnehmersystem anhand der Zeichnung näher erläutert.
Es zeigen in prinzipieller und nicht maßstäblicher Darstellung die
- Fig.1: einen teilweisen Längsschnitt durch das Wegaufnehmersystem mit angeschlossenem, teilweise dargestellten Schaltmagneten;
- Fig.2: in Blickrichtung von oben nach unten in drei Schritten den Wickelvorgang für die Primärwicklung;
- Fig.3: eine stirnseitige Ansicht auf den Mittelsteg der Spulenkörper;
- Fig.4: in Blickrichtung von oben nach unten in drei Schritten aufgeteilt den Wickelvorgang betreffend die Sekundärwicklungen.

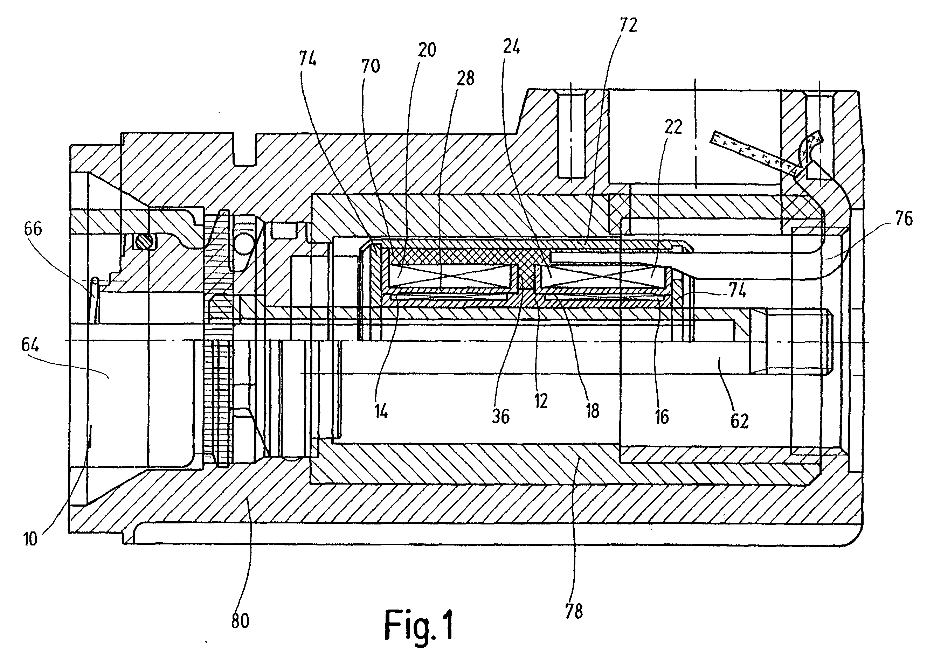

Das in der Fig.1 gezeigte Wegaufnehmersystem für einen als Ganzes mit 10 bezeichneten und teilweise dargestellten Schaltmagneten weist eine auf zwei Kammern des Grundspulenkörpers 12 angeordnete Spulenwicklungen 18 auf, die die Primärwicklung bilden. Unter Bildung zweier Sekundärwicklungen 20,22 ist über jeder Spulenwicklung 14,16 der Primärwicklung 18 eine darüberliegende weitere Spulenwicklung 24 angeordnet. Wie insbesondere der Querschnitt nach der Fig.1 zeigt, können die Sekundärwicklungen 20,22 im Durchmesser größer dimensioniert sein als die zugeordnete Primärwicklung 18. Die Primärwicklung 18 ist auf dem Grundspulenkörper 12 aufgewickelt und die beiden darüberliegenden zugeordneten Sekundärwicklungen 20,22 auf einem weiteren Spulenkörper 28, der den Grundspulenkörper 12 unter Anlage mit der Primärwicklung 18 umfaßt.

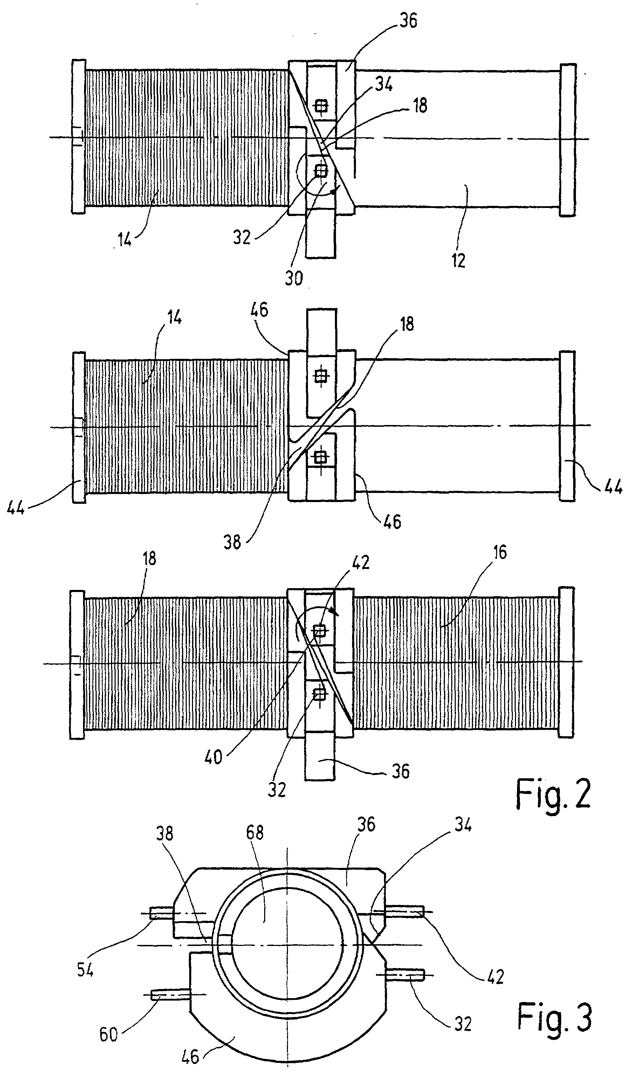

Beim Aufbringen der Primärwicklung 18 wird unter Bezugnahme auf die Darstellung nach der Fig.2 wie folgt verfahren. Zunächst wird in einem ersten Schritt, wie in Fig.2 zuoberst dargestellt, der Wickelanfang der Primärwicklung 18 an der ersten Anbindestelle 32, die man auch als Pin bezeichnet, angebunden und dann in Blickrichtung auf die Fig.2 gesehen die linke Kammer des Grundspulenkörpers 12 mit der Spulenwicklung versehen. Dabei wird der Wickelanfang 30 der Primärwicklung 18 in einer ersten Nut 34 eines Mittelsteges 36 geführt, der mittig Teil des Grundspulenkörpers 12 ist. Anschließend wird in einem zweiten Schritt, der in Fig.2 in der Mitte dargestellt ist, der Wickeldraht durch eine zweite Nut 38, die der ersten Nut 34 diametral gegenüberliegt (vgl. Fig.3), in Richtung der bisher leer gebliebenen Kammer des Grundspulenkörpers 12 verlegt, wobei diese dann anschließend bewickelt wird.

Die angesprochenen Wicklungen können in mehreren Lagen erfolgen und das Wickelende 40 der in der zweiten Kammer aufgebrachten Spulenwicklung der Primärwicklung 18 wird an die zweite Anbindestelle 42 angeschlagen, nachdem das Wickelende 40 wiederum teilweise durch die erste Nut 34 des Mittelsteges 36 geführt wurde. Der derart hergestellte Grundspulenkörper 12 mit der Primärwicklung 18 ist in Blickrichtung auf die Fig.2 zuunterst dargestellt und zeigt den dritten Fertigungsschritt. Die Spulenwicklungen 14 und 16 verlaufen dabei in Kammern separiert in mehreren Lagen zwischen den beiden Endflanschen 44 des Grundspulenkörpers 12 und den den Endflanschen 44 zugeordneten gegenüberliegenden Anlageflächen 46 des Mittelsteges 36. Wie insbesondere die Stirnansicht auf den Mittelsteg 36 zeigt, ist die erste Nut 34 im Querschnitt dreieckförmig ausgebildet und die zweite Nut 38 weist im Querschnitt eine Rechteckform auf, wobei beide Nuten 34,38 nach außen zur Umgebung hin sich öffnen.

In einem weiteren Verfahrens- oder Herstellschritt wird dann zum Herstellen der jeweiligen Sekundärwicklung 20,22 der weitere Spulenkörper 28 aus zwei symmetrisch aufgebauten Körperhälften 48,50 zusammengesetzt, die auf den Grundspulenkörper 12 mit seinen beiden Spulenwicklungen 14,16 der Primärwickiung 18 von beiden Enden her, also über ihre Endflansche 44, aufsteckbar sind. Die zwei Wickelkammern ausbildenden Körperhälften 48,50 sind über eine Lagesicherung (nicht dargestellt) gegen Verdrehen nach endseitigem Aufschieben auf den Grundspulenkörper 12 gegenüber diesem in ihrer Position gesichert. Zusätzlich ist der innenliegende Anstoßflansch der Körperhälften 48,50 mit einer Durchführnut durchbrochen, der mit den Nuten 34,38 im Mittelsteg 36 einen gemeinsamen Nutverlauf zur Führung der Wicklung bildet. Mithin kann auch der Sekundärwicklungsdraht von einer Spulenseite oder von einer Körperhälfte 48 zur gegenüberliegenden 50 ohne Unterbrechung geführt werden. Insbesondere können die Körperhälften 48,50 als Schnappteile ausgebildet sein, die ohne größeren Montagedruck von Hand auf den Grundspulenkörper 12 aufschnappbar und verrastbar sind.

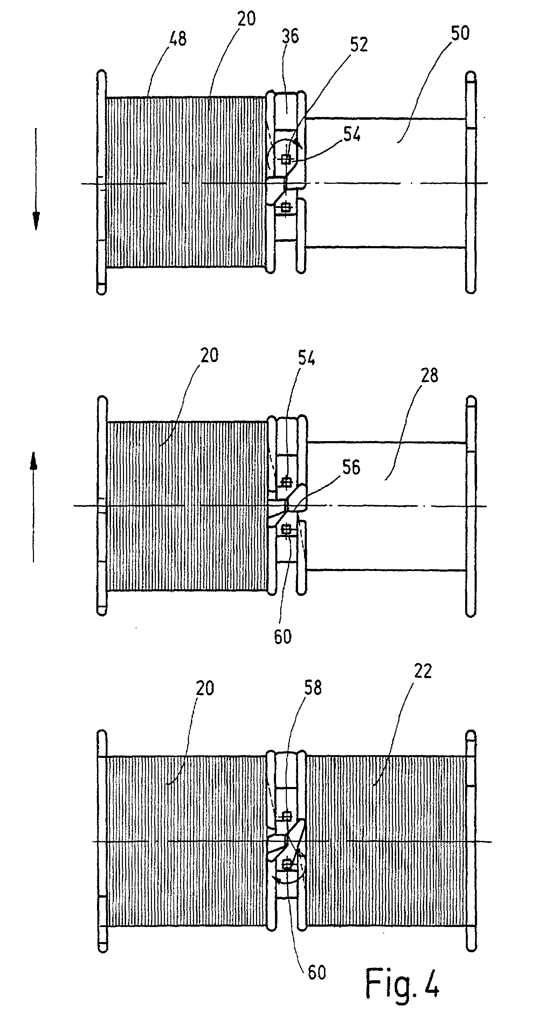

Nachdem die Körperhälften 48,50 unter Bildung des weiteren Spulenkörpers 28 auf den Grundspulenkörper 12 mit seiner Primärwicklung 18 aufgeschoben sind und stirnseitig sich in Anlage befinden mit den zugeordneten Anlageflächen 46 des Mittelsteges 36, wird in Blickrichtung auf die Fig.4 gesehen in dem zuoberst dargestellten Wickelschritt der Wickelanfang 52 der ersten Sekundärwicklung 20 an die dritte Anbindestelle 54 angeschlagen. Diese dritte Anbindestelle 54 ist ebenfalls Bestandteil des Mittelsteges 36, wie dies insbesondere die Fig.3 zeigt. Die Drehrichtung zum Wickeln der Kammer der ersten Körperhälfte 48 ist in Blickrichtung auf die Fig.4 gesehen links oben mit einem Pfeil angegeben. Nach Bewickeln der Körperhälfte 48 wird der Sekundärwickeldraht, wie die mittige Darstellung zeigt, über eine Schlitzführung 56 in die andere Körperhälfte 50 übergeführt und die dahingehende Kammer wird bewikkelt, wobei die Drehrichtung zum Wickeln der Kammer in der mittleren Darstellung der Fig.2 wiederum links dargestellt mit einem Pfeil wiedergegeben ist.

Nachdem beide Sekundärwicklungen 20,22 auf dem weiteren Spulenkörper 28 aufgebracht sind, wird das Wickelende 58 an der vierten Anbindestelle 60 angeschlagen und mit dieser durch Umwickeln verbunden. Die derart fertiggestellte Sekundärwicklungsanordnung ist in Blickrichtung auf die Fig.4 zuunterst dargestellt. Wie insbesondere die Fig.2 zeigt, sind die jeweiligen Anbindestellen 32,42 von Primärwicklung 18 sowie die Anbindestellen 54 und 60 der jeweiligen Sekundärwicklung 20,22 diametral einander gegenüberliegend zu Paaren geordnet an dem Mittelsteg 36 vorzugsweise einstückig angebracht. Insbesondere sind die jeweiligen Anbindestellen 32,42,52 und 60 von dem jeweiligen Wicklungsdraht umwickelbaren vorstehenden Festlegezapfen gebildet (vgl. Fig.3). Durch die verbindende Kontaktierung von Sekundärwicklung 20 zur Sekundärwicklung 22 sind diese in der geforderten Präzision herstellbar und in einem Wickelvorgang durchgehend zu erzeugen, so daß separate Kontaktierungen entfallen können.

Für eine mechanische Nullpunkt-Justierung kann es vorgesehen sein, den weiteren Spulenkörper 28 mit seinen Körperhälften 48,50 verschiebbar in vorgebbaren Positionen auf dem Grundspulenkörper 12 mit seiner Primärwicklung 18 anzuordnen. Wie insbesondere der Längsschnitt durch die Fig.1 zeigt, ist der Grundspulenkörper 12 von einem Kernstab 62 durchgriffen, der mit dem kolbenförmigen Schaltteil 64 entgegen der Kraftwirkung einer Druckfeder 66 in üblicher und daher nicht näher beschriebener Art und Weise zusammenwirkt. Wie insbesondere die Fig.3 zeigt, ist die Mittenausnehmung 68 des Grundspulenkörpers 12 auch im Bereich seines Mittelsteges 36 im Querschnitt kreisförmig für die Aufnahme des zylindrischen Kernstabes 62 ausgebildet. Nach außen hin sind die beiden Sekundärwicklungen 20,22 von einer zylindrischen Abdeckung 70 umgeben, die wiederum von einem Eisenmantel 72 außenumfangsseitig umschlossen ist. Der Eisenmantel 72 ist an seinen beiden einander gegenüberliegenden Enden nach innen eingebördelt und hält mithin die Spulenanordnung zwischen stirnseitig angeordneten Flanschsegmenten 74. Des weiteren ist eine stirnseitige elektrische Kontaktierung 76 vorhanden, die die Primärwicklung 18 mit der pulsierenden Versorgungsspannung versorgt und ansonsten die Meßwerterfassung an den Sekundärwicklungen 20,22 ermöglicht. Das gesamte Wegaufnehmersystem ist in einem Wegaufnehmergehäuse 78 angeordnet, das sich stirnseitig mit einem Gehäuse 80 des Schaltmagneten verbinden läßt.

Mit dem erfindungsgemäßen Wegaufnehmersystem ist gewährleistet, daß das Ausgangssignal sich linear zum Verfahrweg des Kernstabes 62 verändern kann. Äußere Störfelder, beispielsweise hervorgerufen durch magnetische Streufelder od.dgl., können bei der vorliegenden Anordnung das Signal nicht schädigend beeinflussen. Ferner ist gewährleistet, daß das Verhältnis von Meßstrecke zur Länge des Wegaufnehmersystems möglichst groß und mithin günstig ist. Weiter ist durch die erfindungsgemäße Anordnung gewährleistet, daß das Ausgangssignal und der gegebenenfalls mechanisch einstellbare Nullpunkt sich bei Temperaturveränderungen nur in sehr engen Grenzen verändern und mithin das Meßergebnis nicht ungünstig beeinflussen.

## Patentansprüche

1. Wegaufnehmersystem für Schaltmagnete (10) mit mindestens zwei auf einem Grundspulenkörper (12) hintereinander angeordneten Spulenwicklungen (14,16), wobei diese Spulenwicklungen (14,16) eine Primärwicklung (18) bilden, wobei unter Bildung zweier Sekundärwicklungen (20,22) jeder Spulenwicklung (14,16) der Primärwicklung (18) darüberliegend eine weitere Spulenwicklung (24) angeordnet ist, wobei der Grundspulenkörper (12) in Längsrichtung etwa mittig einen Mittelsteg (36) aufweist, und wobei an dem Mittelsteg (36) paarweise diametral einander gegenüberliegend jeweils Anbindestellen (32,42; 54,60) für den Wickelanfang (30;52) und das Wickelende (40;58) von Primär- und Sekundärwicklungen (18,20) vorhanden sind.

2. Wegaufnehmersystem nach Anspruch 1, **dadurch gekennzeichnet, daß** die beiden Spulenwicklungen (14,16) der Primärwicklung (18) auf dem Grundspulenkörper (12) aufgewickelt sind und die beiden Sekundärwicklungen (20,22) auf einem weiteren Spulenkörper (28) angeordnet sind, der den Grundspulenkörper (12) unter Anlage mit der Primärwicklung (18) umfaßt.

3. Wegaufnehmersystem nach Anspruch 2, **dadurch gekennzeichnet, daß** der weitere Spulenkörper (28) aus zwei Körperhälften (48,50) gbildet ist, die auf den Grundspulenkörper (12) mit seinen beiden Spulenwicklungen (14,16) der Primärwicklung (18) von beiden Enden her aufsteckbar sind.

4. Wegaufnehmersystem nach Anspruch 1, **dadurch gekennzeichnet, daß** die Anbindestellen (32,42,52,60) aus von dem jeweiligen Wicklungsdraht umwickelbaren Festlegezapfen gebildet sind.

5. Wegaufnehmersystem nach Anspruch 1 oder 4, **dadurch gekennzeichnet, daß** der Mittelsteg (36) von einer Drahtführung, insbesondere in Form von Nuten (34,38), durchbrochen ist und beidseitig Anlageflächen (56) für die aufsteckbaren Körperhälften (48,50) des weiteren Spulenkörpers (28) aufweist.

6. Wegaufnehmersystem nach einem der Ansprüche 2 bis 5, **dadurch gekennzeichnet, daß** für eine mechanische Nullpunkt-Justierung der Grundspulenkörper (12) und der weitere Spulenkörper (28) oder Teile (48,50) derselben zueinander verschiebbar angeordnet sind.

7. Wegaufnehmersystem nach einem der Ansprüche 1 bis 6, **dadurch gekennzeichnet, daß** der Grundspulenkörper (12) zumindest teilweise einen Kernstab (62) umfaßt, der mit einem Schaltteil (64) des Schaltmagneten (10) zusammenwirkt und der bei seiner Bewegung eine Spannungsänderung in den Sekundärwicklungen (20,22) hervorruft.

8. Wegaufnehmersystem nach einem der Ansprüche 1 bis 7, **dadurch gekennzeichnet, daß** an die beiden Spulenwicklungen (14,16) der Primärwicklung (18) eine pulsierende Versorgungsspannung anlegbar ist.

9. Wegaufnehmersystem nach einem der Ansprüche 1 bis 8, **dadurch gekennzeichnet, daß** die Sekundärwicklungen (20,22) von einer Abdeckung (70) und diese von einem Eisenmantel (72) nach außen umfangsseitig umschlossen sind.

## Claims

1. Displacement sensor system for solenoid coils (10) comprising at least two coil windings (14, 16) arranged in line on a main coil body (12), the said coil windings (14, 16) forming a primary winding (18), and an additional coil winding (24) being arranged to form two secondary windings (20, 22) on top of each coil winding (14, 16) of the primary winding (18), the main coil body (12) having a central rib (36) approximately in the centre in the longitudinal direction, the lacing on points (32, 42; 54, 60) for the start of the windings (30;52) and the end of the windings (40; 58) of the primary and secondary windings (18. 20) being arranged in pairs and at diametrically opposite points on the said central rib (36).

2. Displacement sensor system according to Claim 1, **characterised in that** the two coil windings (14, 16) of the primary winding (18) are wound on the main coil body (12) and the two secondary windings (20, 22) are arranged on an additional coil body (28) which includes the main coil body (12) with overlayed primary winding (18).

3. Displacement sensor system according to Claim 2, **characterised in that** the additional coil body (28) is formed by two body parts (48, 50) which can be plugged on to the main coil body (12) with its two coil windings (14, 16) of the primary windings (18) from both sides.

4. Displacement sensor system according to Claim 1, **characterised in that** the lace on points (32, 42, 52, 60) are formed by the attachment pin over which the respective winding wire can be wound on.

5. Displacement sensor system according to Claim 1 or 4, **characterised in that** the centre rib (36) is interrupted by a wire guide channel, particularly in the shape of a groove (34, 38) and has on both sides locating faces (56) for the pluggable body halves (48, 50) of the additional coil body (28).

6. Displacement sensor system according to one of the Claims 2 to 5, **characterised in that** the main coil body (12) and the additional coil bodies (28) or parts thereof (48, 50) are relocatable in relation to each other to provide mechanical zero point adjustment.

7. Displacement sensor system according to one of the Claims 1 to 6, **characterised in that** the main coil body (12) covers at least partly a core bar (62) interacting with a switching part (64) of the solenoid coil (10) which brings about a voltage change in the secondary windings (20, 22) when it moves.

8. Displacement sensor system according to once of the Claims 1 to 7, **characterised in that** a pulsating supply voltage can be applied to the two coil windings (14, 16) of the primary winding (18).

9. Displacement sensor system according to the Claims 1 to 8, **characterised in that** the secondary windings (20, 22) are enclosed within a cover (70) which in turn is enclosed by a peripheral iron casing (72).

## Revendications

1. Système de capteur de déplacement pour aimants d'indexage (10) avec au moins deux enroulements sur bobines (14, 16) disposés l'un derrière l'autre sur une armature de la bobine de champ de base (12), ces enroulements sur bobines (14, 16) constituant un enroulement du circuit primaire (18), un autre enroulement sur bobines (24) étant, avec constitution de deux enroulements secondaires (20, 22) de chaque enroulement sur bobines (14, 16) du circuit primaire (18), disposé dessus, l'armature de la bobine du champ de base (12) présentant dans le sens longitudinal approximativement au centre une entretoise centrale (36) et des points de liaison (32, 42 ; 54, 60) pour le début du bobinage (30 ; 52) et la fin du bobinage (40 ; 58) d'enroulements du circuit primaire et secondaire (18, 20) étant respectivement présents sur l'entretoise centrale (36) par paires diamétralement opposées l'une par rapport à l'autre.

2. Système de capteur de déplacement selon la revendication 1, **caractérisé en ce que** les deux enroulements sur bobines (14, 16) du circuit primaire (18) sont enroulés sur l'armature de la bobine de champ de base (12) et les deux enroulements secondaires (20, 22) sont disposes sur une autre armature de bobine de champ (28), qui comprend l'armature de la bobine de champ de base (12) avec disposition avec le circuit primaire (18).

3. Système de capteur de déplacement selon la revendication 2, **caractérisé en ce que** l'autre armature de bobine de champ (28) est constituée de deux moitiés d'armature (48, 50), qui sont emboîtables par les deux extrémités sur l'armature de bobine de champ de base (12) avec ses deux enroulements sur bobines (14, 16) du circuit primaire (18).

4. Système de capteur de déplacement selon la revendication 1, **caractérisé en ce que** les points de liaison (32, 42, 52, 60) sont constitués de chevilles de fixation wrappables par le fil d'enroulement respectif.

5. Système de capteur de déplacement selon la revendication 1 ou 4, **caractérisé en ce que** l'entretoise centrale (36) est évidée par un passe-fil, en particulier sous forme de gorges (34, 38) et présente des deux côtés des surfaces d'appui (56) pour les moitiés d'armature emboîtables (48, 50) de l'autre armature de bobine de champ (28).

6. Système de capteur de déplacement selon l'une des revendications 2 à 5, **caractérisé en ce que** pour un réglage mécanique du point zéro l'armature de bobine de champ de base (12) et l'autre armature de bobine de champ (28) ou des parties des mêmes dispositifs (48, 50) sont disposées mobiles l'une par rapport à l'autre.

7. Système de capteur de déplacement selon l'une des revendications 1 à 6, **caractérisé en ce que** l'armature de bobine de champ de base (12) comprend au moins en partie une barre à noyau (62), qui coopère avec une partie commutation (64) de l'aimant d'indexage (10) et qui provoque un changement de tension dans les enroulements secondaires (20, 22) lors de son déplacement.

8. Système de capteur de déplacement selon l'une des revendications 1 à 7, **caractérisé en ce que** une tension d'alimentation ondulée est applicable aux deux enroulements sur bobines (14, 16) du circuit primaire (18).

9. Système de capteur de déplacement selon l'une des revendications 1 à 8, **caractérisé en ce que** les enroulements secondaires (20, 22) sont entourés vers l'extérieur sur la face périphérique par un revêtement (70) et celui-ci par une enveloppe en fer (72).
